# FASCICULE DE BREVET EUROPEEN

(11) **EP 2 048 329 B1**
(45) Date de publication et mention de la délivrance du brevet: **12.08.2015**
(21) Numéro de dépôt: 08165961.7
(22) Date de dépôt: 07.10.2008
(51) Int. Cl.: F01D 15/10, F02K 3/06, H02K 7/18, H02K 9/00, H02K 21/14

(54) **Turboréacteur à générateur électrique agencé dans la soufflante**
Turbostrahltriebwerk mit im Gebläse angebrachtem elektrischem Generator
Turbine engine with electric generator arranged in the fan

(30) Priorité: 08.10.2007 FR 0758130
(43) Date de publication de la demande: 15.04.2009
(73) Titulaire: Snecma, 75015 Paris (FR)
(72) Inventeur: Colin, Antoine, 91800 Brunoy (FR)
(74) Mandataire: Intès, Didier Gérard André

(56) Documents cités:
- EP-A2- 1 930 554
- WO-A-2005/073519
- DE-A1- 1 803 419
- GB-A- 2 360 752
- GB-A- 2 409 936
- US-A- 2 853 638
- US-A- 4 057 270
- US-A1- 2007 029 803

## Description

L'invention se rapporte à un turboréacteur à double corps comportant un corps haute pression et un corps basse pression ; elle concerne plus particulièrement un perfectionnement permettant d'améliorer le prélèvement de puissance mécanique pour fournir du courant électrique au reste de l'avion.

Un turboréacteur double corps comprend classiquement une nacelle abritant un corps haute pression comportant un compresseur haute pression et une turbine haute pression, et un corps basse pression comportant un compresseur basse pression et une turbine basse pression et entraînant la soufflante.

La fonction d'un tel turboréacteur est généralement non seulement d'assurer la propulsion de l'avion, mais également de fournir du courant électrique à l'avion pour différentes utilisations comme l'alimentation des calculateurs , l'éclairage de la cabine, etc.

La tendance actuelle vise à augmenter la part du prélèvement de puissance mécanique, convertie en puissance électrique, en raison du rôle croissant des moyens électriques, réputés plus souples d'emploi au niveau de l'avion.

Un générateur de courant électrique est utilisé pour transformer une partie de la puissance mécanique délivrée par le turboréacteur en courant électrique.

Habituellement, ce générateur n'est pas situé dans le turboréacteur. Un arbre secondaire est lié par engrenage à l'un des arbres du turboréacteur, qui le met en rotation lorsque le moteur est en fonctionnement, et lui transmet ainsi la puissance mécanique nécessaire pour faire fonctionner le générateur électrique. Celui-ci peut ainsi être disposé au voisinage de l'extrémité de cet arbre, à l'extérieur du turboréacteur.

Suivant un autre mode de réalisation connu, présenté par la demande internationale PCT WO 2007/036202, le générateur électrique peut également être agencé à l'intérieur même du turboréacteur, plus précisément dans le corps haute pression. Avantageusement, ce générateur fonctionne de manière réversible, en faisant également office de démarreur.

En effet, lors du démarrage du turboréacteur on commence par mettre le corps haute pression en rotation, à l'aide du générateur électrique utilisé comme moteur électrique. Le compresseur haute pression alimente alors la chambre de combustion en air sous pression, ce qui permet à la combustion de s'établir, et à l'étage haute pression du turboréacteur de démarrer. La turbine basse pression est alors entraînée en rotation par le flux d'air primaire sortant, entrainant ainsi le corps basse pression et la soufflante. Le turboréacteur est alors démarré, et l'on coupe l'alimentation du démarreur électrique qui arrête de fonctionner comme moteur d'entrainement du compresseur haute pression.

L'agencement du générateur électrique au niveau du corps haute pression présente comme avantage principal, le fait que ce générateur peut d'une part être utilisé comme moteur électrique pour le démarrage du turboréacteur, comme cela vient d'être exposé, et d'autre part peut être utilisé comme générateur électrique pour fournir du courant au reste de l'avion.

En revanche, cette disposition présente divers inconvénients. Le plus marquant est le mauvais rendement global de la conversion de puissance mécanique en puissance électrique, lorsque le générateur électrique est disposé ainsi. En effet, la surconsommation de carburant nécessaire pour fournir une puissance électrique donnée est supérieure lorsque le générateur électrique prélève de la puissance dans le corps haute pression par rapport à ce qu'elle peut être lorsqu'il prélève de la puissance sur le corps basse pression.

D'autre part, l'aménagement d'un générateur électrique au niveau du corps haute pression est difficile. Cette zone est en effet de faible diamètre et comporte de nombreuses canalisations. Ainsi la mise en place et la maintenance du générateur sont-elles difficiles.

De surcroît, comme les aubes du compresseur haute pression sont habituellement des aubes à calage variable, il est difficile de réduire la distance ou entrefer entre le rotor et le stator. Il en résulte qu'habituellement, le générateur électrique ainsi réalisé présente un rendement relativement faible.

Enfin, la mise en place d'un générateur électrique tirant sa puissance du corps haute pression peut poser un problème d'opérabilité pour le turboréacteur. Un prélèvement de puissance mécanique trop élevé a un effet négatif sur le fonctionnement du corps HP, car il est susceptible de provoquer le pompage du compresseur HP, en particulier quand le moteur fonctionne à bas régime.

Un autre mode de réalisation connu, pour prélever de la puissance mécanique dans un turboréacteur afin de produire du courant électrique, est présenté par la demande internationale PCT WO 2005/073519.

Pour la génération de courant, ce document propose d'ajouter une turbine supplémentaire, dédiée à la production de courant électrique, en aval de la soufflante dans le flux secondaire d'un turboréacteur, cette turbine étant indépendante en rotation des corps du turboréacteur.

Cependant, l'ajout de cette turbine rend la structure du turboréacteur beaucoup plus complexe, et augmente le poids et le volume de celui-ci. En outre, le rendement de conversion de puissance mécanique en puissance électrique est relativement peu élevé.

Enfin, le document DE 1803419 divulgue d'autres modes de réalisation de générateurs électriques agencés dans des turboréacteurs.

Le but de l'invention est de définir un turboréacteur comportant un corps haute pression, un corps basse pression entraînant une soufflante disposée dans un carter fixe, et un générateur électrique agencé dans la soufflante, prélevant une puissance sur celle-ci, et comportant un rotor intégré à la soufflante, et ne présentant pas les inconvénients précités.

Ce but est atteint grâce au fait que le turboréacteur présente les caractéristiques définies par la revendication 1.

L'agencement du générateur électrique dans la soufflante, c'est-à-dire plus précisément sur des parties mobiles de la soufflante et sur des parties fixes comme le carter de soufflante, présente divers avantages.

Un premier avantage réside dans le fait qu'on dispose d'une place importante pour le générateur électrique. Le carter de soufflante qui est une partie de la nacelle est suffisamment large pour abriter les bobinages permettant la production de courant électrique et des harnais électriques permettant l'acheminement de ce courant vers le pylône supportant le turboréacteur. La mise en place et la maintenance du générateur électrique ne sont donc pas ou peu perturbées par des problèmes d'encombrement.

D'autre part, la soufflante est une zone froide, ce qui évite les problèmes que pourraient causer des températures élevées. Ainsi dans le générateur électrique, selon l'invention, les aimants ne sont pas refroidis, la température au sein de la soufflante n'atteignant jamais la température de Curie, au-delà de laquelle ils perdraient leurs propriétés magnétiques.

Pour la même raison, les bobinages du générateur électrique étant dans une zone froide du turboréacteur, ils ne nécessitent que de faibles moyens de refroidissement. Ceux-ci peuvent donc avoir un encombrement et une masse réduits.

Notons par ailleurs que le générateur électrique est partiellement constitué par des éléments du turboréacteur (les aubes, le carter de soufflante) qui sont nécessaires dans le turboréacteur, indépendamment de la présence du générateur électrique. De ce fait, l'augmentation de masse du turboréacteur strictement liée au générateur électrique reste faible.

En outre, du fait de la dimension importante de la soufflante, il est possible de réaliser un générateur électrique de relativement grande puissance, apte à alimenter en courant simultanément différents équipements électriques de l'appareil sur lequel est monté le turboréacteur. Cette possibilité a d'autant plus d'importance que le nombre d'équipements électriques embarqués sur les avions va croissant.

Enfin, comme cela a été dit précédemment, il est favorable de prélever de la puissance sur le corps basse pression plutôt que sur le corps haute pression. En agençant le générateur électrique dans la soufflante, on satisfait cette condition préférentielle et on obtient ainsi une meilleure efficacité, un meilleur rendement de la conversion de puissance mécanique en puissance électrique, et surtout, on évite les problèmes d'instabilité et d'opérabilité du turboréacteur à bas régime en cas de prélèvement de puissance excessif sur le corps haute pression.

Par ailleurs, il est possible de prévoir en outre dans le turboréacteur, un autre générateur électrique, lié au corps haute pression et prélevant une puissance sur celui-ci.

La présence d'un tel second générateur électrique en plus du générateur électrique disposé dans la soufflante, permet de répartir le prélèvement de puissance entre les deux générateurs électriques ce qui favorise encore davantage l'opérabilité du moteur en particulier à bas régime.

Par ailleurs, le générateur électrique qui est agencé dans la soufflante ne peut plus être utilisé comme moteur électrique pour le démarrage du turboréacteur.

Un avantage supplémentaire de ce second générateur électrique prélevant de la puissance sur le corps haute pression, est qu'il peut quant à lui être mixte, c'est-à-dire pouvoir fonctionner également en tant que moteur électrique : il peut ainsi être utilisé pour le démarrage du turbomoteur. Le turbomoteur comporte ainsi en plus du générateur disposé dans la soufflante, un autre générateur et/ou démarreur respectivement prélevant et/ou fournissant une puissance au corps haute pression.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

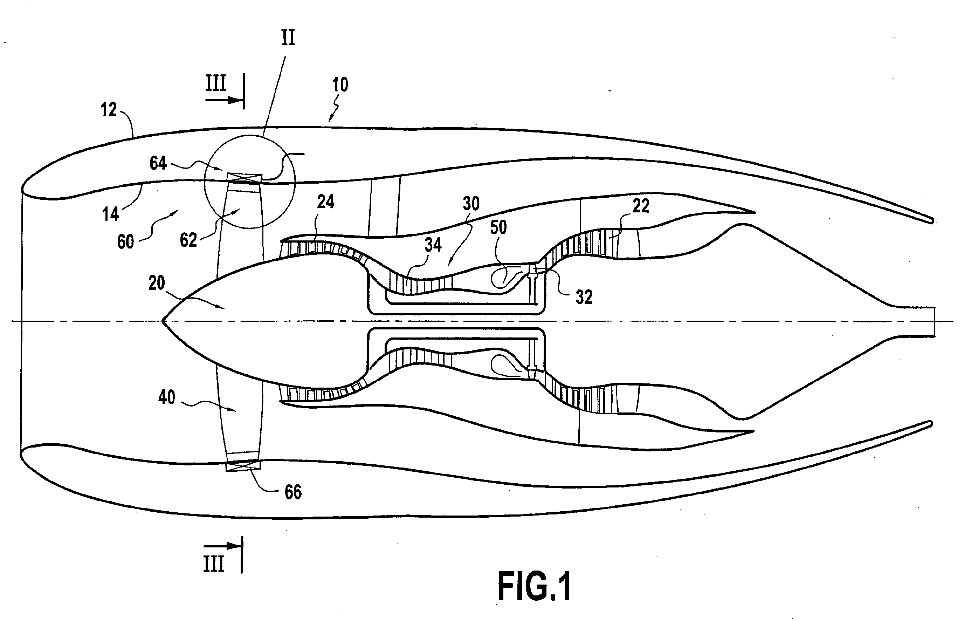

- la figure 1 est une vue schématique d'un turboréacteur double corps auquel s'applique l'invention ;
- la figure 2 est une vue schématique illustrant plus particulièrement les moyens de l'invention ; et
- la figure 3 présente une vue frontale du turboréacteur faisant apparaître les positions des bobinages du générateur électrique.

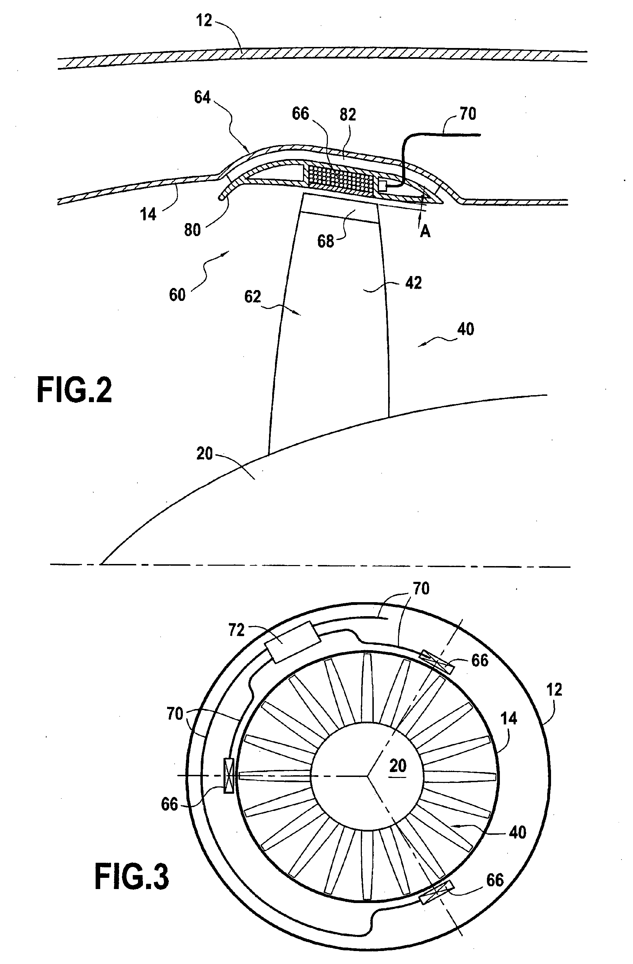

Le turboréacteur 10 représenté sur les figures est du type à double corps, classique, avec un corps haute pression 30 comportant un compresseur haute pression 34 et une turbine haute pression 32, et un corps basse pression 20, comportant un compresseur basse pression 24 et une turbine basse pression 22. Le corps basse pression 20 entraîne une soufflante 40 disposée dans un carter de soufflante 14. Ce carter de soufflante 14 fait lui-même partie de la nacelle 12 du turboréacteur 10. En faisant référence à la figure 2, un mode préféré de réalisation de l'invention va maintenant être décrit. Cette figure présente la zone du turboréacteur dans laquelle est agencé le générateur électrique 60 selon l'invention, c'est-à-dire, la zone de la soufflante.

Le générateur électrique 60 est disposé en périphérie de la soufflante et comporte un rotor 62 intégré aux extrémités radialement extérieures des aubes de soufflante, et un stator 64 intégré au carter de soufflante

Le rotor 62 comporte des aimants permanents 68 fixés à l'extrémité des aubes de soufflante 42 qui créent le champ rotorique ; il est ainsi disposé à l'intérieur du carter de soufflante et n'augmente pas le diamètre de celui-ci, permettant ainsi l'ajout du générateur dans la soufflante (et son carter) sans augmentation du diamètre ni du carter de soufflante ni de la nacelle.

Avantageusement, le rotor 62 ne comporte donc que des pièces simples, massives, et pas de bobinages ou de pièces complexes, davantage susceptibles d'être détériorés par les fortes centrifuges considérables s'exerçant aux extrémités des aubes de soufflante.

Si N est le nombre d'aubes de la soufflante, alors le générateur sera constitué de N/2 paires de pôles. Il peut être également envisagé de ne pas équiper toutes les pales d'un aimant, et par exemple de n'en équiper qu'une sur deux.

Les aimants 68 peuvent être constitués de Samarium-Cobalt, matière usuellement utilisée pour ce type de générateur électrique.

Ils sont fixés à l'extrémité des aubes de soufflante 42, par exemple par collage. Ils sont disposés de manière à réduire autant que possible l'entrefer A qui sépare les aimants 68 du bobinage 66. Avantageusement, lorsque cet entrefer A diminue, on augmente à la fois le rendement du générateur électrique 60 et celui de la soufflante 40.

La partie statorique pour sa part est constituée de bobinages 66 intégrés au carter de soufflante. Ces bobinages 66 ou enroulements statoriques peuvent être en cuivre. Ils sont disposés au droit du lieu de passage des aimants 68 lors de la rotation des aubes 42 de la soufflante 40. Avantageusement, de manière à obtenir un courant triphasé et comme le présente la figure 3, le stator 64 comporte trois bobinages. Dans un autre mode de réalisation, il peut comporter trois groupes identiques de bobinages, espacés respectivement de 120° autour de l'axe du turbomoteur.

La partie statorique est donc la source de courant proprement dite. Avantageusement, la partie statorique est fixe, ce qui permet un acheminement simple du courant vers les autres équipements de l'avion consommateurs de courant.

Pour le refroidissement du stator 64 du générateur électrique (et notamment des bobinages 66), il est prévu pour chacun des bobinages 66, une écope ou un déflecteur 80 disposé(e) à l'intérieur du carter de soufflante pour prélever une partie du flux d'air entrant dans la nacelle. Cette écope ou déflecteur prélève de l'air frais admis dans le carter de nacelle, et le dirige dans une conduite de refroidissement 82 circulant à proximité du bobinage 66 pour assurer le refroidissement de celui-ci.

Naturellement, les variations de régime du moteur font varier le courant électrique délivré par le générateur électrique, en particulier en tension et en fréquence. Pour réguler ce courant et obtenir une tension continue, le générateur électrique comporte en outre un convertisseur alternatif / continu 72 disposé en sortie des bobinages 66, c'est-à-dire sur le circuit de courant électrique entre ceux-ci et les parties de l'avion alimentées en courant.

Des harnais électriques 70 assurent le transport du courant électrique généré du stator 64 du générateur électrique 60 vers l'avion. Ces harnais 70 traversent le carter de nacelle, et sont connectés au réseau électrique de l'avion via le mât support du moteur.

On peut noter enfin qu'avantageusement, comme les vitesses atteintes en extrémité d'aubes sont relativement élevées (tout en restant subsoniques), la puissance délivrée par le générateur électrique peut être relativement importante sans qu'il soit nécessaire pour autant d'utiliser des aimants et/ou des bobinages de grande dimension.

## Revendications

1. Turboréacteur comportant un corps haute pression (30), un corps basse pression (20), une nacelle (12), un générateur électrique (60) ;
le corps basse pression entraînant une soufflante (40) disposée dans un carter fixe (14) faisant partie de la nacelle ;
le générateur électrique étant agencé dans la soufflante (40) et prélevant une puissance sur celle-ci ;
le générateur électrique comportant un rotor (62) intégré à la soufflante et comportant des aimants permanents (68) fixés aux aubes de soufflante (42) ;
le turboréacteur **se caractérisant en ce que** le générateur électrique comporte en outre un stator (64) intégré au carter de soufflante (14), et
**en ce que** le turboréacteur comporte en outre une écope (80) disposée dans le carter de soufflante (14) pour le refroidissement dudit stator (64).

2. Turboréacteur selon la revendication 1, **caractérisé en ce que** lesdits aimants (68) sont fixés par collage.

3. Turboréacteur selon la revendication 1 ou 2, **caractérisé en ce qu'**il comporte en outre un autre générateur et/ou démarreur respectivement prélevant et/ou fournissant une puissance au corps haute pression (30).

4. Turboréacteur selon l'une quelconque des revendications 1 à 3, **caractérisé en ce que** le stator (64) comporte exactement trois bobinages (66).

5. Turboréacteur selon l'une quelconque des revendications 1 à 4, **caractérisé en ce que** ledit générateur électrique (60) comporte en outre un convertisseur alternatif / continu (72).

## Patentansprüche

1. Turbostrahltriebwerk, umfassend einen Hochdruckkörper (30), einen Niederdruckkörper (20), eine Gondel (12), einen elektrischen Generator (60),
wobei der Niederdruckkörper ein Gebläse (40), das in einem zu der Gondel gehörenden festen Gehäuse (14) angeordnet ist, antreibt,
wobei der elektrische Generator in dem Gebläse (40) angeordnet ist und an diesem eine Leistung entnimmt,
wobei der elektrische Generator einen Rotor (62) umfasst, der in das Gebläse integriert ist und an den Gebläseschaufeln (42) befestigte Permanentmagneten (68) umfasst,
wobei das Turbostrahltriebwerk **dadurch gekennzeichnet ist, dass** der elektrische Generator ferner einen Stator (64), der in das Gebläsegehäuse (14) integriert ist, umfasst, und dass das Turbostrahltriebwerk ferner ein in dem Gebläsegehäuse (14) angeordnetes Leitblech (80) für die Kühlung des Stators (64) umfasst.

2. Turbostrahltriebwerk nach Anspruch 1, **dadurch gekennzeichnet, dass** die Magneten (68) festgeklebt sind.

3. Turbostrahltriebwerk nach Anspruch 1 oder 2, **dadurch gekennzeichnet, dass** es ferner einen weiteren Generator und/oder Anlasser umfasst, der eine Leistung an dem Hochdruckkörper (30) entnimmt und/oder an ihn liefert.

4. Turbostrahltriebwerk nach einem der Ansprüche 1 bis 3, **dadurch gekennzeichnet, dass** der Stator (64) genau drei Wicklungen (66) umfasst.

5. Turbostrahltriebwerk nach einem der Ansprüche 1 bis 4, **dadurch gekennzeichnet, dass** der elektrische Generator (60) ferner einen Gleichrichter (72) umfasst.

## Claims

1. A turbojet comprising a high pressure spool (30), a low pressure spool (20), a nacelle (12), an electricity generator (60);
the low pressure spool driving a fan (40) provided in a stationary casing (14) which is a part of the nacelle;
the electricity generator being arranged in the fan (40)and taking power therefrom;
the electricity generator including a rotor (62) incorporated in the fan and comprising permanent magnets (68) fastened to the blades of the fan (42);
the turbojet being **characterized in that** the electricity generator includes a stator (64) incorporated in the fan casing (14), and **in that** the turbojet further comprises a scoop (80) provided in the fan casing (14) for the cooling of said stator (64).

2. A turbojet according to claim 1, **characterized in that** said magnets (68) are fastened by adhesive.

3. A turbojet according to claim 1 or 2, **characterized in that** it further includes another generator and/or starter respectively taking or delivering power to the high pressure spool (30).

4. A turbojet according to any one of claims 1 to 3, **characterized in that** the stator (64) has exactly three windings (66).

5. A turbojet according to any one of claims 1 to 4, **characterized in that** said electricity generator (60) further includes an AC/DC converter (72).
